# EUROPEAN PATENT SPECIFICATION

(11) **EP 2 640 671 B1**
(45) Date of publication and mention of the grant of the patent: **14.08.2019**
(21) Application number: 10859776.6
(22) Date of filing: 18.11.2010
(51) Int. Cl.: C02F 5/12, C02F 5/08, C02F 5/00, C02F 3/10, C02F 1/56, C02F 3/34, B01D 61/14, B01D 61/16, C02F 3/12, B01D 65/08

(54) **METHODS FOR IMPROVING MEMBRANE BIOREACTOR SYSTEMS**
VERFAHREN ZUR VERBESSERUNG VON MEMBRANBIOREAKTORSYSTEMEN
PROCÉDÉS D'AMÉLIORATION DE SYSTÈMES DE BIORÉACTEUR À MEMBRANE

(43) Date of publication of application: 25.09.2013
(73) Proprietor: BL Technologies, Inc., Minnetonka, MN 55341 (US)
(72) Inventor: WANG, Sijing, Shanghai 201203 (CN); VASCONCELLOS, Stephen, Robert, Trevose, PA 19053-6742 (US); WANG, Jianqiu, Beijing 100020 (CN)
(74) Representative: Fonquernie, Sophie Benedicte
(86) International application number: PCT/CN2010/001847
(87) International publication number: WO 2012/065283

(56) References cited:
- WO-A2-2010/053826
- CN-A- 1 872 734
- CN-A- 101 511 739

## Description

### FIELD OF THE INVENTION

The present invention relates to methods for improving membrane bioreactor systems, and in particular, to methods of conditioning microbial mixed liquor and improving flux in the membrane bioreactor (MBR) systems.

### BACKGROUND OF THE INVENTION

Wastewater from municipal and industrial plants can be clarified by biologically treating the wastewater in a membrane bioreactor (MBR) system. In an MBR, microorganisms consume dissolved organic compounds in the wastewater and membranes sieve the suspended solids or biomass from the treated wastewater (or mixed liquor) to produce clarified water.

An optimized output of clarified water depends on the efficiency of the MBR system and the flux of the membranes. The conditions and qualities of the biological populations of the microorganisms in the MBR system will affect the operation of the MBR and the filterability of the mixed liquor. Substances in the mixed liquor, such as extracellular polymeric substances, colloidal and soluble organic substances, can deposit onto the membranes, plugging them and causing increased membrane resistance and decreased flux.

Inorganic coagulants and inert particle additives can be added to MBR systems to condition the mixed liquor by coagulating and flocculating colloids and other substances, which decreases the soluble substances in the mixed liquor and improves filterability and membrane flux. However, these additives can require specific and narrow pH ranges, can increase sludge concentrations, cause membrane wear from the abrasiveness of the treatment additive particles or cause additional membrane plugging when the treatment additives themselves become lodged in the pores of the membrane.

Water soluble cationic polymers are also available for conditioning the mixed liquor in the MBR and enhancing membrane flux. However, large amounts of the cationic polymers are needed for effective treatment. Continuing efforts are needed for developing and finding more improved and cost-effective water soluble treatment additives for conditioning the mixed liquor in an MBR system to enhance membrane flux and improve MBR efficiency. WO 2010/053826 A2 discloses a method of conditioning mixed liquor in a membrane bioreactor, comprising dispersing a treatment additive in the mixed liquor, wherein said treatment additive comprises a water soluble copolymer comprising tannin.

### SUMMARY OF THE INVENTION

It is claimed a method of conditioning mixed liquor in a membrane bioreactor comprising dispersing a treatment additive in the mixed liquor, wherein said treatment additive includes a water soluble block copolymer, wherein the block copolymer contains two segments as shown in the formula defined in claim 1.

It is further claimed a method of improving flux in a membrane bioreactor comprising conditioning mixed liquor by dispersing a treatment additive in the mixed liquor and passing the conditioned mixed liquor through a membrane, wherein said treatment additive includes a water soluble block copolymer, wherein the block copolymer contains two segments as shown in the formula defined in claim 1.

It is further claimed a method of clarifying wastewater includes adding wastewater to a membrane bioreactor, preparing a mixed liquor by adding microorganisms to the wastewater in the presence of oxygen, conditioning the mixed liquor by dispersing a treatment additive in the mixed liquor, filtering the conditioned mixed liquor with a membrane to produce clarified wastewater, said treatment additive including a water soluble block copolymer, wherein the block copolymer contains two segments as shown in the formula defined in claim 1.

The various embodiments provide improved MBR efficiency by increasing filterability of sludge membrane flux, reduced membrane cleanings and reduced risk from problems associated with handling peak flows. The improved efficiency can reduce costs by allowing operation of the MBR with fewer membranes, higher membrane flux and reduced membrane cleanings.

### DETAILED DESCRIPTION OF THE INVENTION

The singular forms "a," "an" and "the" include plural referents unless the context clearly dictates otherwise. The endpoints of all ranges reciting the same characteristic are independently combinable and inclusive of the recited endpoint. All references are incorporated herein by reference.

The modifier "about" used in connection with a quantity is inclusive of the stated value and has the meaning dictated by the context (e.g., includes the tolerance ranges associated with measurement of the particular quantity).

"Optional" or "optionally" means that the subsequently described event or circumstance may or may not occur, or that the subsequently identified material may or may not be present, and that the description includes instances where the event or circumstance occurs or where the material is present, and instances where the event or circumstance does not occur or the material is not present.

"Water soluble" means that the compound, such as polymer, block copolymer or monomer, that is described as water soluble is dissolvable in water or an aqueous solution. In one embodiment, the term "water soluble" means that the compound, block copolymer or monomer that is described is fully miscible in water or an aqueous solution.

"Water insoluble" means that the compound, such as polymer or monomer, that is described as water insoluble is not dissolvable or is poorly dissolvable in water or an aqueous solution.

In one embodiment, a method of conditioning mixed liquor in a membrane bioreactor includes dispersing a treatment additive in the mixed liquor, wherein said treatment additive includes a water soluble block copolymer.

The mixed liquor or activated sludge may be a mixture of wastewater, microorganisms used to degrade organic materials in the wastewater, organic-containing material derived from cellular species, cellular by-products or waste products, or cellular debris. The mixed liquor may contain colloidal and particulate material (biomass or biosolids), soluble molecules or biopolymers, such as polysaccharides or proteins.

An MBR system couples biological wastewater treatment and membrane filtration. The MBR may be any type of MBR system. In one embodiment, an MBR system includes membranes and a bioreactor tank containing microorganisms, which biodegrade the organic material in the wastewater. The bioreactor tank may be an aerobic tank or reactor and may include other types of reactors, such as anaerobic reactors, anoxic reactors or additional aerobic reactors. Influent wastewater may be pumped or gravity-flowed into a bioreactor tank where it is brought into contact with microorganisms to form a mixed liquor in the presence of oxygen or aeration. Excess activated sludge may be pumped out of the bioreactor tank into a sludge holding tank to maintain a constant sludge age in the bioreactor. The oxygen supply or aeration may be provided by blowers.

In one embodiment, the mixed liquor is filtered through membranes and clarified water is discharged from the system. The mixed liquor may be passed through the membranes under pressure or may be drawn through the membranes under vacuum. The membrane module may be immersed in the bioreactor tank or contained in a separate membrane tank to which wastewater is continuously pumped from the bioreactor tank. The membrane may be a hollow fiber with an outer skin micro- or ultrafilter or a flat sheet (in stacks) micro- or ultrafilter. The membrane materials may include, but are not limited to, chlorinated polyethylene (PVC), polyvinylidene fluoride (PVDF), polyacrylonitrile (PAN), polysulfone (PSF), polyethersulfone (PES), polyvinylalcohol (PVA), cellulose acetate (CA), regenerated cellulose (RC) as well as inorganics, such as metallic and ceramic.

According to the invention, the mixed liquor is conditioned with the dispersion of a treatment additive. The treatment additive enhances membrane flux by coagulating and flocculating soluble organic compounds in the mixed liquor to prevent membrane fouling. The treatment additive includes a water soluble block copolymer. The water soluble block copolymer may include water soluble monomers and water insoluble monomers. The block copolymer may include a polymeric segment obtained from the polymerization of hydrophobic or water insoluble monomers attached to a polymer chain obtained from the polymerization of one or more water soluble monomers.

According to the invention, the block copolymer contains two segments as shown in the following formula:

-[E]-[D]-

wherein E is a polymeric segment obtained from the polymerization of one or more hydrophobic monomers or water insoluble monomers, said polymeric segment being a poly(2-ethylhexyl acrylate) (PEHA), and D is a polymeric segment obtained from the polymerization of one or more water soluble monomers.

The hydrophobic polymers are water insoluble and can be prepared by precipitation or emulsion polymerization techniques of one or more hydrophobic monomers. In one embodiment, the hydrophobic monomers include, but are not limited to, alkylacrylates, alkylmethacrylamidesalkylacrylamidesalkylmethacrylates, alkylstyrenes, higher alkyl esters of ethylenically unsaturated carboxylic acids, akylaryl esters of ethylenically unsaturated carboxylic acids, ethylenically unsaturated amides, vinyl alkylates wherein the alkyl group has at least 8 carbons, such as vinyl laureate and vinyl stearate, vinyl alkyl ethers, such as dodecyl vinyl ether and hexadecyl vinyl ether, N-vinyl amides, such as N-vinyl and vinyl alkyl ethers, and arylalkyl, such as t-butyl styrene. The higher alkyl esters of ethylenically unsaturated carboxylic acids include, but are not limited to, alkyl dodecyl acrylate, dodecyl methacrylate, tridecyl acrylate, tridecyl methacrylate, octadecyl acrylate, octadecyl methacrylate, ethyl half ester of maleic anhydride, diethyl maleate and other alkyl esters derived from the reactions of alkanols having from 8 to 20 carbon atoms with ethylenically unsaturated carboxylic acids, such as acrylic acid, methacrylic acid, maleic anhydride, fumaric acid, itaconic acid and aconitic acid. The akylaryl esters of ethylenically unsaturated carboxylic acids include, but are not limited to, nonyl-α-phenyl acrylate, nonyl-α-phenyl methacrylate, dodecyl-α-phenyl acrylate and dodecyl-α-phenyl methacrylate. Ethylenically unsaturated amides include, but are not limited to, N-octadecyl acrylamide, N-octadecylmethacrylamide, N,N-dioctyl acrylamide and similar derivaties thereof.

The hydrophobic monomer may be an alkyl acrylate. The alkyl group in the alkyl acrylate has from 4 to 16 carbon atoms. The hydrophobic monomer may also be 2-ethylhexyl acrylate. The 2-ethylhexyl acrylate may be polymerized by a diperoxide initiator, 2,5-dihydroperoxy-2,5-dimethylhexane to obtain poly(2-ethylhexyl acrylate) (PEHA). According to the invention, E is a poly(2-ethylhexyl acrylate) (PEHA).

According to the invention, D is a polymeric segment obtained from the polymerization of one or more water soluble monomers. The water soluble monomers may be nonionic or cationic. D may be obtained from the polymerization of a cationic monomer, a nonionic monomer or a combination of a cationic monomer and a nonionic monomer.

According to the invention, D has the formula:

-[A]ₓ-[J]_{y}-

wherein A is a nonionic monomer of the formula: 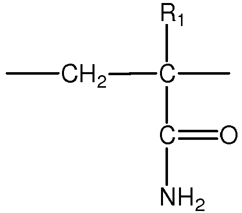
wherein R₁ is hydrogen or a C₁-C₃ alkyl group
wherein J has the structure: 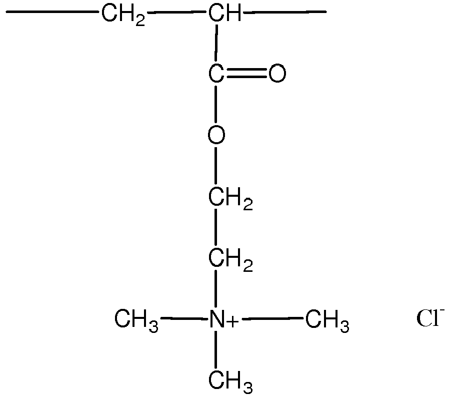 and wherein x is 0 or a positive integer and y is 0 or a positive integer.

In one embodiment, the molar ratio of x:y is from about 0:100 to about 95:5. In another embodiment, the molar ratio of x:y is from about 10:90 to about 75:25.

In one embodiment, R₁ is hydrogen.

In another embodiment, R₁ is methyl.

The block copolymers may be prepared by a water-in-oil emulsion technique. Such processes have been disclosed in U.S. Pat. Nos. 3,284,393, Re. 28,474 and Re. 28,576. The resulting copolymers may also be further isolated by precipitating in an organic solvent, such as acetone, and dried to a powder form. The powder can be easily dissolved in an aqueous medium for use.

Branching agents, such as polyethyleneglycoldi(meth)acrylate, methylene bis(meth)acrylamide, N-vinyl acrylamide, allyl glycidyl ether, glycidyl acrylate and the like may also be added, providing the resulting block copolymer is water soluble.

In one embodiment, the water soluble block copolymer has a number average molecular weight within the range of from about 100,000 to about 8,000,000. The water soluble block copolymer may have a number average molecular weight within the range of from about 500,000 to about 6,000,000. The molecular weight of the block copolymer is not critical, as long as it is soluble in water.

The structure of the block copolymer may be substantiated by conventional means, such as by solution viscosity study or C¹³ NMR spectroscopy.

In one embodiment, the treatment additive is dispersed in the mixed liquor in any conventional manner and mixed with the mixed liquor prior to being in contact with the membrane surface. The treatment additive may be added to the mixed liquor upstream from the membranes. The treatment additive may also be added into an area of the bioreactor where an intensive mixing occurs or is allowed sufficient mixing time with the mixed liquor, such as near a pump station, an aeration nozzle or a sludge/mixed liquor recycling pipe.

The treatment additive is dispersed in any amount suitable for conditioning the mixed liquor. This amount will vary depending upon the particular system for which treatment is desired and can be influenced by the characteristics of the wastewater, such variables as turbidity, pH, temperature, flow rate, water quantity, mixed liquor concentrations and properties, suspended solids, floc size, viscosity and type of contaminants present in the system. The treatment additive may be added in amount of from about 0.1 ppm by volume active polymers to about 100 ppm by volume active polymers, based on the volume of wastewater. The treatment additive may also be added in an amount of from about 1 ppm by volume active polymers to about 80 ppm by volume active polymers. The treatment additive may also be added in an amount of from about 10 ppm by volume active polymers to about 50 ppm by volume active polymers, based on the volume of wastewater.

In another embodiment, the treatment additive may include other water-soluble polymers or inorganic coagulants. The additional water soluble polymers or inorganic coagulants may be added separately to the mixed liquor or in a combination with the water-soluble block copolymer. These additional polymers and coagulants work in collaboration with the water soluble block copolymer for conditioning the mixed liquor and improving flux in the MBR systems. The additional polymers or coagulants may be added in amounts effective for reducing the dosage of the treatment additive while achieving similar membrane flux enhancement performance. In another embodiment, use of the treatment additive can substantially reduce the amount of the additional polymers and coagulants. Examples of the water soluble polymers may be tannin- containing polymers, polydiallyldimethyl ammonium chloride (polyDADMAC), polymethacryloyloxyethyltrimethylammonium chloride (polyMETAC) or copolymers of N,N-Dimethylaminoethyl Acrylate Methyl Chloride (AETAC) and acrylamide (AM).

In one embodiment, the inorganic coagulants may be selected from the group of inorganic compounds containing Ca, Mg, Si, Al, Fe and combinations thereof. The inorganic coagulant may be selected from the group of inorganic salts or their polymerized forms containing Al, Fe, or combinations thereof. In another embodiment, a method of improving flux in a membrane bioreactor includes conditioning mixed liquor by dispersing a treatment additive in the mixed liquor and passing the conditioned mixed liquor through a membrane, wherein said treatment additive includes a water soluble block copolymer.

The mixed liquor is conditioned with the dispersion of a treatment additive. The treatment additive enhances membrane flux by coagulating and flocculating soluble organic compounds in the mixed liquor to prevent membrane fouling. The treatment additive includes a water soluble block copolymer, which is described above.

In one embodiment, the treatment additive is dispersed in the mixed liquor in any conventional manner and mixed with the mixed liquor prior to being in contact with the membrane surface. The treatment additive may also be added to the mixed liquor upstream from the membranes. The treatment additive may also be added into an area of the bioreactor where an intensive mixing occurs or is allowed sufficient mixing time with the mixed liquor, such as near a pump station, an aeration nozzle or a sludge/mixed liquor recycling pipe.

The treatment additive is dispersed in any amount suitable for conditioning the mixed liquor. This amount will vary depending upon the particular system for which treatment is desired and can be influenced by the characteristics of the wastewater, such variables as turbidity, pH, temperature, flow rate, water quantity, mixed liquor concentrations and properties, suspended solids, floc size, viscosity and type of contaminants present in the system. The treatment additive may be added in amount of from about 0.1 ppm by volume active polymers to about 100 ppm by volume active polymers, based on the volume of wastewater. The treatment additive may also be added in an amount of from about 1 ppm by volume active polymers to about 80 ppm by volume active polymers. The treatment additive may also be added in an amount of from about 10 ppm by volume active polymers to about 50 ppm by volume active polymers, based on the volume of wastewater.

In another embodiment, the treatment additive may include other water-soluble polymers or inorganic coagulants as described above.

The membrane bioreactor (MBR) and mixed liquor are described above. In one embodiment, the conditioned mixed liquor is filtered through membranes and clarified water is discharged from the system. The conditioned mixed liquor may also be passed through the membranes under pressure or may be drawn through the membranes under vacuum. The membrane module may be immersed in the bioreactor tank or contained in a separate membrane tank to which wastewater is continuously pumped from the bioreactor tank. The membrane may be a hollow fiber with an outer skin micro- or ultrafilter or a flat sheet (in stacks) micro- or ultrafilter.. The membrane materials may include, but are not limited to, chlorinated polyethylene (PVC), polyvinylidene fluoride (PVDF), polyacrylonitrile (PAN), polysulfone (PSF), polyethersulfone (PES), polyvinylalcohol (PVA), cellulose acetate (CA), regenerated cellulose (RC) as well as inorganics, such as metallic and ceramic.

In another embodiment, a method of clarifying wastewater includes adding wastewater to a membrane bioreactor, preparing a mixed liquor by adding microorganisms to the wastewater in the presence of oxygen, conditioning the mixed liquor by dispersing a treatment additive in the mixed liquor, filtering the conditioned mixed liquor with a membrane to produce clarified wastewater, said treatment additive including a water soluble block copolymer.

Wastewater may be from municipal and industrial plants and can contain extracellular polymeric substances and colloidal and soluble organic substances.

The mixed liquor is conditioned with the dispersion of a treatment additive. The treatment additive includes a water soluble block copolymer, which is described above. The treatment additive may be dispersed in the mixed liquor in any conventional manner and mixed with the mixed liquor prior to being in contact with the membrane surface. The treatment additive may be added to the mixed liquor upstream from the membranes. The treatment additive may also be added into an area of the bioreactor where an intensive mixing occurs or is allowed sufficient mixing time with the mixed liquor, such as near a pump station, an aeration nozzle or a sludge/mixed liquor recycling pipe.

The treatment additive is dispersed in any amount suitable for conditioning the mixed liquor. This amount will vary depending upon the particular system for which treatment is desired and can be influenced by the characteristics of the wastewater, such variables as turbidity, pH, temperature, flow rate, water quantity, mixed liquor concentrations and properties, suspended solids, floc size, viscosity and type of contaminants present in the system. The treatment additive may be added in amount of from about 0.1 ppm by volume active polymers to about 100 ppm by volume active polymers, based on the volume of wastewater. The treatment additive may also be added in an amount of from about 1 ppm by volume active polymers to about 80 ppm by volume active polymers.

The treatment additive may also be added in an amount of from about 10 ppm by volume active polymers to about 50 ppm by volume active polymers, based on the volume of wastewater.

In another embodiment, the treatment additive may include other water-soluble polymers or inorganic coagulants as described above.

The conditioned mixed liquor may be filtered through membranes to sieve suspended solids or biomass and clarified water is discharged from the system. The conditioned mixed liquor may be passed through the membranes under pressure or may be drawn through the membranes under vacuum. The membrane module may be immersed in the bioreactor tank or contained in a separate membrane tank to which wastewater is continuously pumped from the bioreactor tank. The membrane may be a hollow fiber with an outer skin ultrafilter, a flat sheet (in stacks) microfilter or a hollow fiber with an outer skin microfilter. The membrane materials may include, but are not limited to, chlorinated polyethylene (PVC), polyvinylidene fluoride (PVDF), polyacrylonitrile (PAN), polysulfone (PSF), polyethersulfone (PES), polyvinylalcohol (PVA), cellulose acetate (CA), regenerated cellulose (RC) as well as inorganics, such as metallic and ceramic.

In order that those skilled in the art will be better able to practice the present disclosure, the following examples are given by way of illustration and not by way of limitation.

### EXAMPLES

### EXAMPLE 1

Mixed liquor samples for testing in Examples 1-3 were taken from a municipal Wastewater Treatment Plant at the GE China Technology Center. The samples were taken from the activated sludge recycling line where the MLSS concentration was above 10g/L.

A standard jar test with a Jar Tester (Phipps & Bird™) on each testing sample and control sample was conducted to ensure proper mixing. Four 500 ml aliquots of the mixed liquor were added to four jars. A treatment additive, Polymer A or Polymer B, was quickly added to each sample, in the amounts shown in Table 1. A control sample was also prepared by adding 500 ml of the mixed liquor to a control jar without the addition of a treatment additive. All the samples were rapidly agitated at 200 rpm for 30 seconds and then at a slow agitation speed of 50 rpm for 15 minutes to thoroughly mix the samples.

The filterability of the mixed liquor for each sample including the Control Jar was evaluated by the Time-to-Filter (TTF) test method. The TTF test method was adapted from Standard Methods (APHA, 1992), Method #2710H. A 9 cm filter paper (Whatman GF/C, Catalog No. 1822 090) was placed in a Buchner funnel and was wet to form a good seal. A 200 ml sample from each of the treated mixed liquor samples and the Control Jar was added to a separate Buchner funnel (as prepared above). A vacuum pressure of 51 kPa (15 inch Hg) was applied using a vacuum pump with a pressure regulator. The time required to filter 50 ml (or 25% of the initial sample volume (25%-TTF)) of each mixed liquor sample was measured and is shown in Table 1.

**Table 1.**

| Sample | Treatment Additive | Dosage (ppm) | 25%-TTF (s) | 25%-TTF reduction compared to the Control |
|---|---|---|---|---|
| Control | None | 0 | 1484 | 0.0% |
| 1 | Polymer A¹ | 100 | 878 | 40.8% |
| 2 | Polymer A¹ | 250 | 44 | 97.0% |
| 3 | Polymer B² | 100 | 713 | 52.0% |
| 4 | Polymer B² | 250 | 13 | 99.1% |

| | | | | |
|---|---|---|---|---|
| ¹Polymer A contains about 38% actives (by weight) of a block copolymer of AETAC/AM/EHA. Its molecular weight is in the range of 4,000,000 to 6,000,000. ²Polymer B is another block copolymer product containing about 45% actives (by weight). The block copolymer is polymerized by monomers of AETAC/AM/EHA and its molecular weight is in the range of 4,000,000 to 6,000,000. The monomers of AETAC/AM/EHA refer to N,N-Dimethylaminoethyl Acrylate Methyl Chloride (AETAC), acrylamide (AM) and 2-ethylhexyl acrylate (EHA), respectively. | | | | |

The data shows a very significant improvement in the filterability of the mixed liquor by adding the treatment additive of either Polymer A or Polymer B.

### EXAMPLE 2

A standard jar test with a Jar Tester (Phipps & Bird™) on each following testing sample and control sample was conducted to ensure proper mixing. Five 500 ml aliquots of the mixed liquor were added to five jars. A treatment additive as shown in Table 2 was added to each sample. A control sample was also prepared by adding 500 ml of the mixed liquor to a control jar without the addition of a treatment additive. All of the samples were rapidly agitated at 200 rpm for 30 seconds and then at a slow agitation speed of 50 rpm for 15 minutes to thoroughly mix the samples.

The filterability of the mixed liquor for each sample including the Control Jar was evaluated by the TTF test method as described in Example 1. A 200 ml sample from each of the treated mixed liquor samples and the Control Jar was added to a separate Buchner funnel. A vacuum pressure of 51 kPa (15 inch Hg) was applied using a vacuum pump with a pressure regulator. The time required to filter 100 ml (or 50% of the initial sample volume (50%-TTF)) of each mixed liquor sample was measured and is shown in Table 2.

**Table 2.**

| Sample | Polymer C¹ dosage (ppm) | Polymer A² dosage (ppm) | 50%-TTF (s) | 50%-TTF reduction compared to Control |
|---|---|---|---|---|
| Control | 0 | 0 | 1831 | 0.0% |
| CE-5 | 500 | 0 | 258 | 85.9% |
| 6 | 300 | 20 | 311 | 83.0% |
| 7 | 400 | 10 | 297 | 83.8% |
| 8 | 400 | 15 | 243 | 86.7% |
| 9 | 400 | 20 | 184 | 90.0% |

| | | | | |
|---|---|---|---|---|
| ¹Polymer C contains about 38% actives (by weight) of a block copolymer of tannin/AETAC wherein the weight percentage of AETAC is about 57.5%. The molecular weight is about 75,000. ² Polymer A contains about 38% actives (by weight) of a block copolymer of AETAC/AM/EHA. Its molecular weight is in the range of 4,000,000 to 6,000,000. | | | | |

The data shows that the treatment additive with the tannin-containing polymer enhances the filterability of the mixed liquor samples. With aid of the block copolymer, the dosage of the tannin-containing polymer can be reduced, while still providing good filterability. As the block copolymers showed very strong flocculation capability, it required much lower dosage to achieve the same filterability enhancement.

### EXAMPLE 3

A standard jar test with a Jar Tester (Phipps & Bird™) on each following testing sample and control sample was conducted to ensure proper mixing. Six 500 ml aliquots of the mixed liquor were added to six jars. A treatment additive as shown in Table 3 was quickly added to each testing sample. A control sample was also prepared by adding 500 ml of the mixed liquor to a control jar without the addition of a treatment additive. All the samples were rapidly agitated at 200 rpm for 30 seconds and then at a slow agitation speed of 50 rpm for 15 minutes to thoroughly mix the samples.

The filterability of the mixed liquor for each sample including the Control Jar was evaluated by the TTF test method as described in Example 1. A 200 ml sample from each of the treated mixed liquor samples and the Control Jar was added to a separate Buchner funnel. A vacuum pressure of 51 kPa (15 inch Hg) was applied using a vacuum pump with a pressure regulator. The time required to filter 100 ml (or 50% of the initial sample volume (50%-TTF)) of each mixed liquor sample was measured and is shown in Table 3.

**Table 3**

| Sample | Polymer A¹ dosage (ppm) | Alum Coagulant² dosage (ppm) | FeCl₃³ dosage (ppm) | 50%-TTF (s) | 50%-TTF reduction compared to the Control |
|---|---|---|---|---|---|
| Control | 0 | 0 | 0 | 564 | 0.0% |
| CE-10 | 0 | 0 | 500 | 144 | 74.5% |
| CE-11 | 0 | 0 | 800 | 83 | 85.3% |
| 12 | 50 | 0 | 500 | 47 | 91.7% |
| CE-13 | 0 | 500 | 0 | 130 | 77.0% |
| CE-14 | 0 | 800 | 0 | 75 | 86.7% |
| 15 | 50 | 500 | 0 | 52 | 90.8% |

| | | | | | |
|---|---|---|---|---|---|
| ¹The polymer and alum coagulant or FeCl₃ were added to the mixed liquor separately. ²The alum coagulant product was an aluminum chlorohydrate aqueous product (Al₂(OH)₅Cl) that contained 50% actives. ³The FeCl₃ solution was prepared directly using an anhydrous FeCl₃ chemical reagent (Sinopharm Chemical Reagent Co., Ltd., China). | | | | | |

The data shows that the block copolymer can be added together with either alum or ferric based inorganic coagulants to enhance the filterability of the mixed liquor samples. With aid of the block copolymer, the dosage of the inorganic coagulants can be greatly reduced.

While typical embodiments have been set forth for the purpose of illustration, the foregoing descriptions should not be deemed to be a limitation on the scope herein. Accordingly, various modifications, adaptations and alternatives may occur to one skilled in the art without departing from the scope of the claims.

## Claims

1. A method of conditioning mixed liquor in a membrane bioreactor comprising dispersing a treatment additive in the mixed liquor, wherein said treatment additive comprises a water soluble block copolymer, wherein the block copolymer contains two segments as shown in the following formula:
- [E]-[D]-
wherein E is poly(2-ethylhexyl acrylate) and D is a polymeric segment obtained from the polymerization of one or more water soluble monomers,
wherein D has the formula:
-[A]ₓ-[J]_{y}-
wherein A is a nonionic monomer of the formula: 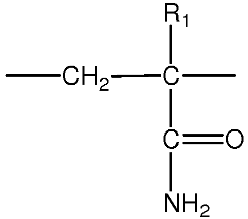
wherein R₁ is hydrogen or a C₁-C₃ alkyl group,
J has the structure: 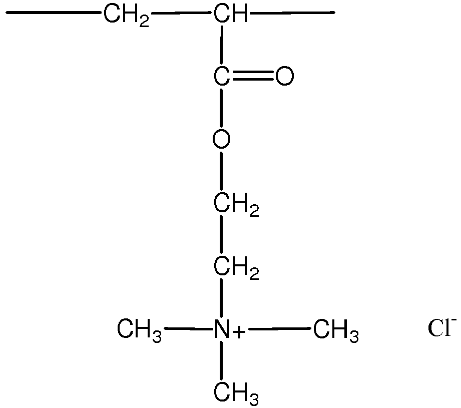 and x is 0 or a positive integer and y is 0 or a positive integer.

2. The method of claim 1, wherein the membrane in the membrane bioreactor is selected from the group consisting of a hollow fiber with an outer skin microfilter or ultrafilter and a flat sheet ultrafilter.

3. The method of claim 1, wherein the membrane material is selected from the group consisting of chlorinated polyethylene, polyvinylidene fluoride, polyacrylonitrile, polysulfone, polyethersulfone, polyvinylalcohol, cellulose acetate and regenerated cellulose.

4. The method of claim 1, wherein the water soluble block copolymer comprises water-soluble monomers and water-insoluble monomers;
wherein the block copolymer comprises a polymeric segment obtained from the polymerization of hydrophobic or water insoluble monomers attached to a polymer chain obtained from the polymerization of one or more water soluble monomers.

5. The method of claim 1, wherein the molar percentage of x:y is from about 0:100 to about 95:5.

6. The method of claim 1 wherein the treatment additive is added to the mixed liquor upstream from the membranes.

7. A method of improving flux in a membrane bioreactor comprising dispersing a treatment additive in the mixed liquor and passing the mixed liquor through a membrane, wherein said treatment additive comprises a water soluble block copolymer, wherein the block copolymer contains two segments as shown in the following formula:
-[E]-[D]-
wherein E and D are as defined in claim 1.

8. A method of clarifying wastewater comprising adding wastewater to a membrane bioreactor, adding microorganisms to the wastewater to prepare a mixed liquor, conditioning the mixed liquor with a treatment additive, filtering the mixed liquor with a membrane to produce clarified water, said treatment additive comprising a water soluble block copolymer, wherein the block copolymer contains two segments as shown in the following formula:
-[E]-[D]-
wherein E and D are as defined in claim 1.

## Patentansprüche

1. Verfahren zum Konditionieren von gemischtem Liquor in einem Membranbioreaktor, umfassend Dispergieren eines Behandlungsadditivs in dem gemischten Liquor, wobei das Behandlungsadditiv ein wasserlösliches Blockcopolymer umfasst, wobei das Blockcopolymer zwei in der folgenden Formel gezeigte Segmente enthält:
-[E]-[D]-
worin E Poly(2-ethylhexylacrylat) ist und D ein polymeres Segment ist, das aus der Polymerisation von einem oder mehreren wasserlöslichen Monomeren erhalten wird,
wobei D die Formel aufweist:
-[A]ₓ-[J]_{y}-
worin A ein nichtionisches Monomer der Formel: 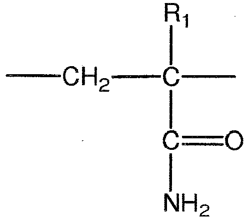 ist,
worin R₁ Wasserstoff oder eine C₁-C₃-Alkylgruppe ist,
J die Struktur hat: 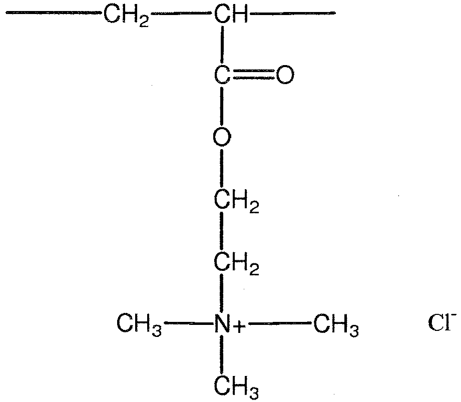 und x 0 oder eine positive ganze Zahl ist und y 0 oder eine positive ganze Zahl ist.

2. Verfahren nach Anspruch 1, wobei die Membran in dem Membranbioreaktor ausgewählt ist aus der Gruppe bestehend aus einer Hohlfaser mit einem Außenhaut-Mikrofilter oder Ultrafilter und einem Flachfolien-Ultrafilter.

3. Verfahren nach Anspruch 1, wobei das Membranmaterial ausgewählt ist aus der Gruppe bestehend aus chloriertem Polyethylen, Polyvinylidenfluorid, Polyacrylnitril, Polysulfon, Polyethersulfon, Polyvinylalkohol, Celluloseacetat und regenerierter Cellulose.

4. Verfahren nach Anspruch 1, wobei das wasserlösliche Blockcopolymer wasserlösliche Monomere und wasserunlösliche Monomere umfasst;
wobei das Blockpolymer ein polymeres Segment umfasst, das aus der Polymerisation von hydrophoben oder wasserunlöslichen Monomeren erhalten wird, die an einer Polymerkette gebunden sind, die aus der Polymerisation von einem oder mehreren wasserlöslichen Monomeren erhalten wird.

5. Verfahren nach Anspruch 1, wobei der molare Prozentsatz von x : y von etwa 0 : 100 bis etwa 95 : 5 beträgt.

6. Verfahren nach Anspruch 1, wobei das Behandlungsadditiv zu dem gemischten Liquor der Membranen vorgeschaltet zugegeben wird.

7. Verfahren zum Verbessern des Flusses in einem Bioreaktor, umfassend das Dispergieren eines Behandlungsadditivs in dem gemischten Liquor und den gemischten Liquor durch eine Membran leiten, wobei das Behandlungsadditiv ein wasserlöslichen Blockpolymer umfasst, wobei das Blockpolymer zwei in der folgenden Formel gezeigte Segmente enthält:
-[E]-[D]-
worin E und D wie in Anspruch 1 festgelegt sind.

8. Verfahren zum Klären von Abwasser, umfassend Zuführen von Abwasser zu einem Membranbioreaktor, Zugeben von Mikroorganismen zu dem Abwasser, um einen gemischten Liquor zu bereiten, Konditionieren des gemischten Liquors mit einem Behandlungsadditiv, Filtern des gemischten Liquors mit einer Membran, um geklärtes Wasser zu erzeugen, wobei das Behandlungsadditiv ein wasserlösliches Blockpolymer umfasst, wobei das Blockpolymer zwei in der folgenden Formel gezeigte Segmente enthält:
-[E]-[D]-
worin E und D wie in Anspruch 1 festgelegt sind.

## Revendications

1. Procédé de conditionnement d'une liqueur mixte dans un bioréacteur à membrane comprenant la dispersion d'un additif de traitement dans la liqueur mixte, dans lequel ledit additif de traitement comprend un copolymère séquencé hydrosoluble, lequel copolymère séquencé contient deux segments tels que présentés dans la formule suivante:
-[E]-[D]-
dans laquelle E est poly(acrylate de 2-éthylhexyle) et D est un segment polymère obtenu par la polymérisation d'un ou plusieurs monomères hydrosolubles,
où D a la formule :
-[A]ₓ-[J]_{y}-
dans laquelle A est un monomère non ionique de formule: 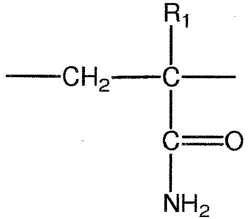
où R₁ est hydrogène ou un groupe alkyle en C₁-C₃,
J a la structure: 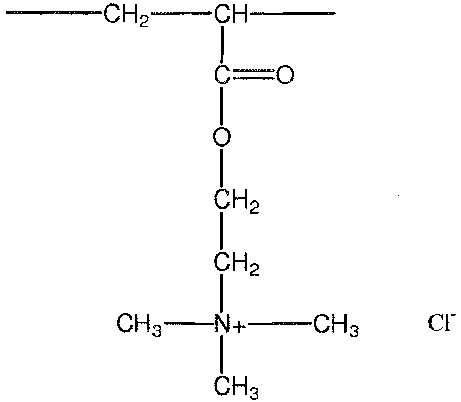 et x est 0 ou un entier positif et y est 0 ou un entier positif.

2. Procédé selon la revendication 1, dans lequel la membrane dans le bioréacteur à membrane est choisie dans le groupe constitué par une fibre creuse ayant un microfiltre ou ultrafiltre formant revêtement extérieur et un ultrafiltre de type plaque.

3. Procédé selon la revendication 1, dans lequel le matériau de la membrane est choisi dans le groupe constitué par un polyéthylène chloré, un fluorure de polyvinylidène, un polyacrylonitrile, une polysulfone, une polyéthersulfone, un alcool polyvinylique, un acétate de cellulose et une cellulose régénérée.

4. Procédé selon la revendication 1, dans lequel le copolymère séquencé hydrosoluble comprend des monomères hydrosolubles et des monomères insolubles dans l'eau;
dans lequel le copolymère séquencé comprend un segment polymère obtenu par la polymérisation de monomères hydrophobes ou insolubles dans l'eau attachés à une chaîne polymère obtenue par la polymérisation d'un ou plusieurs monomères hydrosolubles.

5. Procédé selon la revendication 1, dans lequel le pourcentage molaire de x:y est d'environ 0:100 à environ 95:5.

6. Procédé selon la revendication 1, dans lequel l'additif de traitement est ajouté à la liqueur mixte en amont des membranes.

7. Procédé d'amélioration du flux dans un bioréacteur à membrane comprenant la dispersion d'un additif de traitement dans la liqueur mixte et le passage de la liqueur mixte à travers une membrane, dans lequel ledit additif de traitement comprend un copolymère séquencé hydrosoluble, lequel copolymère séquencé contient deux segments tels que présentés dans la formule suivante:
-[E]-[D]-
dans laquelle E et D sont tels que définis dans la revendication 1.

8. Procédé de clarification d'eau résiduaire comprenant l'addition d'une eau résiduaire à un bioréacteur à membrane, l'addition de micro-organismes à l'eau résiduaire pour préparer une liqueur mixte, le conditionnement de la liqueur mixte avec un additif de traitement, la filtration de la liqueur mixte avec une membrane pour produire une eau clarifiée, ledit additif de traitement comprenant un copolymère séquencé hydrosoluble, lequel copolymère séquencé contient deux segments tels que présentés dans la formule suivante:
- [E]-[D]-
dans laquelle E et D sont tels que définis dans la revendication 1.
